# FASCICULE DE BREVET EUROPEEN

(11) **EP 0 664 528 B1**
(45) Date de publication et mention de la délivrance du brevet: **31.03.1999**
(21) Numéro de dépôt: 95420008.5
(22) Date de dépôt: 13.01.1995
(51) Int. Cl.: G07B 13/02, G07C 7/00

(54) **Procédé et dispositif pour éviter les fraudes sur un taxi équipé d'un taximètre ou sur un camion équipé d'un chronotachygraphe**
Verfahren und Vorrichtung zum Vermeiden von Betrügereien in einem mit einem Taxameter ausgerüsteten Taxi oder in einem mit einem Tachographen ausgerüsteten Lastkraftwagen
Method and device for avoiding fraud in a taxi with a taximeter or in a lorry with a tachograph

(30) Priorité: 25.01.1994 FR 9401046; 08.06.1994 FR 9407203
(43) Date de publication de la demande: 26.07.1995
(73) Titulaire: Ricard, Claude, F-13100 Aix-en-Provence (FR)
(72) Inventeur: Ricard, Claude, F-13100 Aix-en-Provence (FR)
(74) Mandataire: Wind, Jacques

(56) Documents cités:
- EP-A- 0 027 425
- WO-A-91/11757
- US-A- 4 045 656
- US-A- 4 217 484
- US-A- 5 155 747

## Description

La présente invention se rapporte à un procédé, et à un dispositif, pour éviter les fraudes sur un taxi équipé d'un taximètre ou sur un camion équipé d'un chronotachygraphe, le véhicule -taxi ou camion- étant équipé d'au moins un capteur électronique au moins utilisé pour faire fonctionner son taximètre ou chronotachygraphe.

Un capteur dit "électronique" de véhicule automobile est un transducteur qui teste un organe mécanique rotatif du véhicule, la vitesse de rotation de cet organe mécanique étant représentative du nombre de tours de roue effectué par le véhicule, et le signal électrique généralement alternatif fourni par ce transducteur correspondant à des impulsions électriques représentatives de ce nombre de tours de roue.

Traditionnellement, comme décrit par exemple dans la demande de Brevet en France n° 93.02285 déposée par le Demandeur le 19 Février 1993, cet organe mécanique rotatif est le plus souvent un des pignons de la boite de vitesses.

Cette demande de Brevet FR-93.02285, ainsi que la demande de Brevet Européen correspondante n° 93420455.3 déposée le 17 Novembre 1993 sous priorité de celle-ci, et dont le numéro de publication est EP-A-0608651, expliquent comment il est possible d'éviter les fraudes sur le taximètre ou le chronotachygraphe qui reçoit et traite ces impulsions électriques en prévoyant, entre autres dispositions, de rendre inviolable au moyen d'un blindage mécanique tout le circuit compris entre la sortie du capteur et le taximètre ou le chronotachygraphe.

Ce blindage mécanique permet en particulier d'éviter que le chauffeur de taxi ou le camionneur ne puisse venir planter deux aiguilles dans les deux fils respectifs de sortie de signal du capteur, de façon à pouvoir y brancher un générateur d'impulsions en parallèle sur ladite sortie du capteur.

Le fraudeur choisit souvent dans ce cas un générateur d'impulsions d'impédance de sortie bien plus faible que celle du capteur, et les impulsions délivrées par ce générateur viennent, selon le cas, soit étouffer les impulsions délivrées par le capteur et donc se substituer à elles, soit s'additionner à ces dernières.

La demande de Brevet FR-93.02285 précitée indique aussi comment on peut avantageusement blinder mécaniquement, et donc rendre inviolable, l'ensemble du capteur lui-même au moyen d'une cloche qui vient recouvrir le capteur et qui se fixe et se plombe sur la boite de vitesses.

Cependant, les véhicules modernes sont maintenant de plus en plus souvent pourvus d'un système de freinage dit "A.B.S" qui utilise un capteur électronique pour chaque roue de véhicule. Généralement, ces véhicules sont équipés de freins à disque sur les quatre roues, et en conséquence chaque capteur électronique est un capteur de proximité qui vient tester la présence d'encoches qui sont pratiquées à cet effet sur l'arête extérieure du disque de freinage.

Dans un tel cas, il est bien évident que le capteur électronique destiné à faire fonctionner le compteur de vitesses du tableau de bord ainsi que le taximètre ou le chronotachygraphe est l'un des capteurs d'A.B.S déjà présent sur le véhicule. Les impulsions électriques qui sont délivrées par ce capteur sont alors appliquées simultanément au système de freinage A.B.S, au compteur de vitesse du tableau de bord, et au taximètre ou chronotachygraphe.

Ceci pose un problème si l'on veut éviter les fraudes précitées sur le taximètre ou le chronotachygraphe, car il n'est alors pratiquement plus concevable de relier le capteur en question à son circuit d'utilisation par un câble mécaniquement blindé. Ce capteur est en effet situé sur la roue et sur une portion de celle-ci qui, bien que non rotative, est néanmoins soumise à des déplacements sporadiques dus au caractère articulé de cette roue.

Il existe bien dans le commerce des câbles blindés qui présentent une certaine souplesse, mais celle-ci est limitée et il existerait de toute façon un point de rupture assez fragile au point de branchement d'un tel câble blindé sur le capteur.

En outre, un tel câble blindé passerait à proximité immédiate des conduites hydrauliques et des câbles électriques de sécurité qui sont associés au dispositif de freinage de la roue considérée. Lors des mouvements d'articulation de la roue, ces conduites hydrauliques et ces câbles électriques de sécurité viendraient alors frotter contre le câble blindé, les mouvements de ces différents câbles et conduites ne pouvant pas être rigoureusement synchrones.

Il en résulterait une usure rapide de ces conduites hydrauliques et câbles électriques, et par suite des risques inadmissibles de perçages et ruptures de circuit.

L'invention, qui vise à remédier à cet inconvénient, a pour objet de proposer un procédé, et un dispositif, qui permet dans tous les cas d'éviter les fraudes sur un taxi ou un camion, même dans le cas où ce taxi ou ce camion est équipé d'un système de freinage A.B.S.

Elle se rapporte à cet effet à un procédé - et aussi à un dispositif - pour éviter les fraudes sur un taxi équipé d'un taximètre ou sur un camion équipé d'un chronotachygraphe, le véhicule - taxi ou camion - étant équipé d'au moins un capteur électronique qui au moins est utilisé pour le taximètre ou le chronotachygraphe, ce procédé consistant :
. à se brancher directement en parallèle sur deux ou sur les deux fils de sortie de signal électrique de ce capteur,
. et à déclencher une action électronique anti-fraude, qui au moins consiste à modifier l'information électronique normalement transmise au taximètre ou chronotachygraphe si au moins une des caractéristiques internes du dipôle actif alors présent entre ces deux fils, et/ou au moins une des caractéristiques du signal électrique disponible entre ces deux fils lors du déplacement normal du véhicule, a été modifiée par rapport à des valeurs de référence.

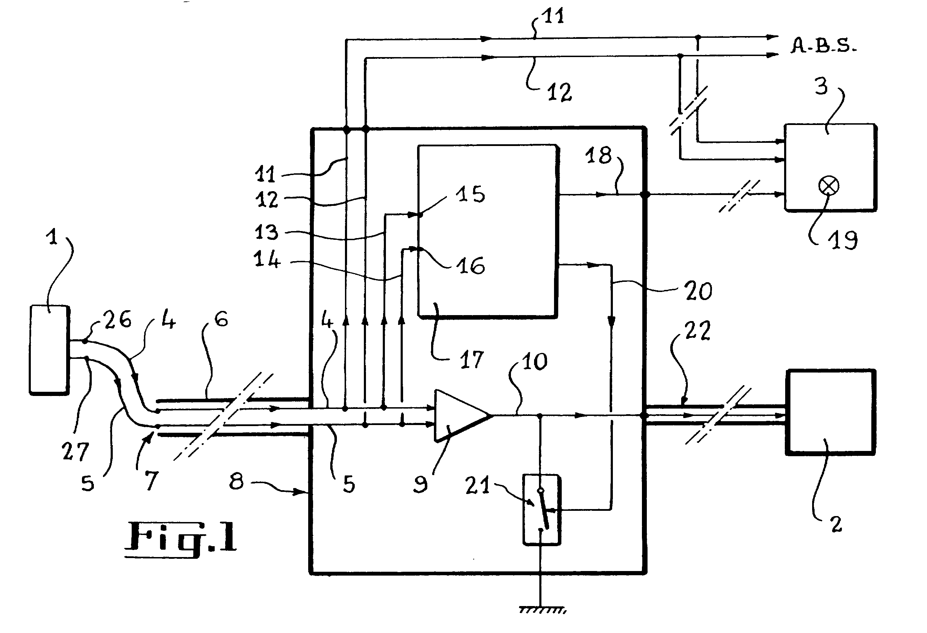

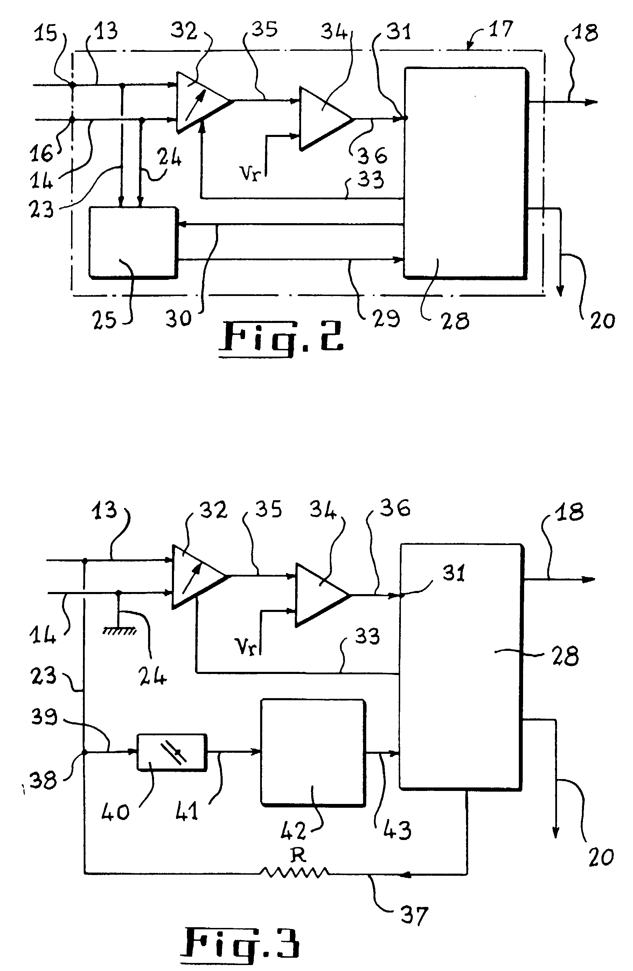

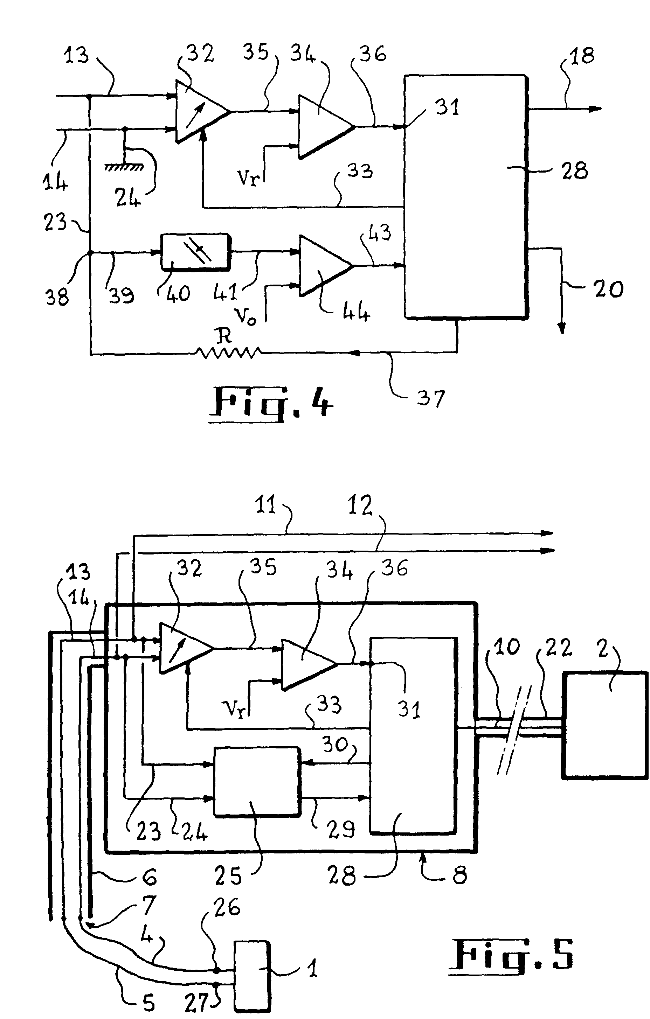

De toute façon, l'invention sera bien comprise, et ses avantages et autres caractéristiques ressortiront mieux, lors de la description suivante de quelques exemples de réalisation, en référence au dessin schématique annexé dans lequel :
. Figure 1 est un schéma synoptique d'un exemple simple de réalisation de l'invention.
. Figure 2 est un schéma synoptique du dispositif de test de caractéristiques qui équipe le dispositif selon Figure 1.
. Figure 3 est une forme particulière de réalisation d'un circuit de test de caractéristiques pour la mise en oeuvre de l'invention.
. Figure 4 montre une variante de réalisation, plus économique, du circuit selon Figure 3.
. Figure 5 est un schéma synoptique d'une autre forme de réalisation d'un dispositif selon l'invention.

Sur la figure 1, la référence 1 désigne un capteur électromagnétique (ou "capteur électronique") du nombre de tours de roue effectué par un taxi muni d'un taximètre 2 et d'un compteur de vitesses prévu sur son tableau de bord 3.

Au lieu d'un taxi, il peut s'agir d'un camion, et dans ce cas la référence 2 désigne le chronotachygraphe dont est muni ce camion.

Dans le cas de figure considéré, le véhicule - taxi ou camion - est muni d'un système de freinage A.B.S., de sorte que le capteur 1, qui a pour objet de fournir des signaux électriques représentatifs du nombre de tours de roue au compteur de vitesses du tableau de bord 3 d'une part et au taximètre ou chronotachygraphe 2 d'autre part, est tout simplement un des capteurs normalement utilisé pour faire fonctionner le système de freinage A.B.S.

Le capteur 1 est donc placé sur une roue du véhicule de sorte que, comme expliqué ci-dessus, il est difficilement pensable de protéger ses deux fils 4,5 de sortie de signal électrique par un blindage mécanique.

Au plus peut-on, selon une caractéristique particulière de l'invention, prévoir un tel blindage mécanique 6 à partir du point 7 à hauteur duquel s'effectue l'articulation de la roue, mais en tous cas pas entre ce point 7 et le capteur 1. Grâce au blindage mécanique 6, il n'est possible au fraudeur de brancher un éventuel générateur d'impulsions auxiliaire que sur la partie des fils 4 et 5 qui est comprise entre ce point 7 et le capteur 1, ce qui facilite grandement le contrôle visuel anti-fraudes, mais n'empêche toutefois pas totalement de réaliser une telle fraude.

A noter qu'entre le point 7 et le taximètre ou chronotachygraphe 2, le blindage mécanique d'inviolabilité est total et il comprend, pratiquement à l'instar du dispositif selon la figure 1 de la demande de Brevet FR-93.02285 précitée, successivement le tronçon de câble blindé 6, une boite blindée inviolable 8 contenant des circuits électriques, et un autre tronçon de câble blindé 22.

Par "câble blindé" on entend ici, comme c'est le cas dans la demande FR-93.02285, un câble électrique entouré d'un blindage mécaniquement inviolable. Il va de soi que ce blindage est généralement aussi un blindage électrique de masse, mais c'est ici d'un blindage d'ordre mécanique dont il est généralement question, et non pas d'un blindage d'ordre purement électrique.

A l'instar du circuit selon la figure 1 de la demande FR-93.02285, la boite blindée inviolable 8 contient un amplificateur opérationnel 9 qui reçoit le signal électrique fourni par le capteur 1 sur les deux fils de sortie de signal 4 et 5, et qui fournit en conséquence sur son fil de sortie 10 un signal remis en forme qui est appliqué, via le câble blindé 22, au taximètre ou chronotachygraphe 2. Cet amplificateur 9 a aussi un rôle de séparateur, et il permet donc de travailler éventuellement sur le signal présent sur le fil 10 sans que le signal présent sur les fils 4 et 5 en amont de l'amplificateur 9 ne s'en ressente.

Comme on le voit sur la figure 1, deux autres paires de fils sont branchées, dans la boite 8, sur la paire de fils 4,5 en amont de l'amplificateur de séparation et mise en forme 9 :
. une première paire de fils 11,12 qui sortent de la boite 8 pour alimenter en signaux impulsionnels d'une part les circuits d'A.B.S. (non représentés) et d'autre part le compteur de vitesses du tableau de bord 3 du véhicule ; et
. une deuxième paire de fils 13,14 qui sont branchés aux deux bornes d'entrée 15,16 d'un dispositif électronique 17 de test de caractéristiques internes du dipôle actif présent entre les fils 4 et 5 (concrètement : du capteur 1 et de sa charge), et/ou de test d'au moins une des caractéristiques du signal présent entre ces deux fils lorsque le véhicule roule à au moins une vitesse prédéterminée.

A titre d'exemple non limitatif, la caractéristique précitée du signal présent entre ces deux fils de sortie 4,5 du capteur 1 peut avantageusement être le rapport cyclique des impulsions déduites, après écrétage éventuel, des signaux alternatifs ou purement impulsionnels fournis par le capteur 1. On rappelle ici que le rapport cyclique des impulsions est le rapport entre la durée de chaque impulsion et l'intervalle de temps complet, ou période, qui sépare le début du front de montée de cette impulsion du début du front de montée de l'impulsion suivante.

La caractéristique interne du dipôle peut être son impédance, prise préférentiellement au sens très général, c'est-à-dire sans distinguer sa résistance, son inductance, et sa capacitance, mais plutôt, comme on le verra ci-après, en relevant la réponse impulsionnelle ou fréquentielle de ce dipôle.

Des exemples non limitatifs de réalisation du dispositif électronique 17 de test de caractéristiques seront décrits ci-après en référence aux figures 2 à 4.

A l'installation du capteur 1 et du taximètre ou chronotachygraphe 2 sur le véhicule, des tests sont effectués en faisant rouler le véhicule selon une ou plusieurs vitesses prédéterminées. De ces tests résultent une ou plusieurs mesures, par le dispositif 17, des caractéristiques précitées, et le résultat de ces mesures-test est mémorisé dans le dispositif 17, qui contient avantageusement un microprocesseur, ou autre organe logique de calcul et de commande, comme on le verra ci-après.

Par la suite, le dispositif électronique 17 compare les valeurs de caractéristiques qu'il teste systématiquement, continuellement ou épisodiquement, à ces caractéristiques mémorisées.

Si ces valeurs ne sont pas conformes, l'organe électronique 17 émet d'une part, sur un premier fil de sortie 18, un signal d'alarme vers le tableau de bord. Ce signal d'alarme déclenche une information maintenue, visuellement ou sonore, qui se matérialise par exemple par l'allumage d'une lampe préférentiellement très brillante 19 sur le tableau de bord 3 ou, encore mieux, par l'émission d'un signal sonore préférentiellement à caractère insoutenable. L'organe électronique 17 émet d'autre part, sur un deuxième fil de sortie 20, un signal de commande de fermeture d'un interrupteur statique à semi-conducteurs 21 qui est branché entre le fil 10 et la masse, de sorte que plus aucune impulsion représentative du nombre de tours de roue ne peut alors parvenir au taximètre ou chronotachygraphe 2, dont le fonctionnement complet est donc empêché.

Afin de ne pas déclencher par erreur ces deux effets au cas où un parasite viendrait fortuitement entraîner une comparaison apparemment non-conforme, le circuit de test 17 n'émet de signaux de non-conformité sur ses sorties 18 et 20 que si cette comparaison non-conforme présente un caractère récurrent, c'est-à-dire se répète plusieurs fois successives de manière régulière et non pas accidentelle. De même, il émet un signal de non-conformité si cette comparaison révèle une déviation très importante, franchement anormale, par rapport à la valeur qu'elle devrait avoir. C'est par exemple le cas lorsque le rapport cyclique des impulsions est de 0,9 au lieu d'être par exemple de 0,1.

A noter que la mémorisation préalable de la ou des valeurs de référence qui servent à la détermination, par comparaison à celles-ci, d'une fraude, n'est pas obligatoire, et dans une forme de réalisation simplifiée, dont un exemple va être maintenant décrit, cette ou ces valeurs de référence peuvent être tout simplement une ou des valeurs figées à l'avance et caractéristiques d'un fonctionnement normal de l'appareil.

Il en est en particulier ainsi lorsque l'on utilise un capteur électronique 1, et des organes du véhicule sur lequel sont branchés ce capteur, qui fournissent toujours, généralement dès l'instant que le véhicule roule à une vitesse supérieure à une vitesse minimale très lente de quelques kilomètres par heure, des impulsions électriques dont le rapport cyclique est constant quelle que soit la vitesse du véhicule, ce rapport cyclique étant d'une valeur en général égale à 0,5. C'est par exemple le cas lorsque l'on utilise un capteur électronique 1 à effet Hall qui teste le passage des dents d'un pignon de la boite de vitesses : la largeur de ces dents, ainsi que des intervalles qui les séparent, est en général toujours la même, et le rapport cyclique des impulsions délivrées par le capteur à effet Hall est alors toujours de 0,5, sauf bien-entendu à très basse vitesse où le démarrage et l'arrêt peuvent se faire au milieu d'une dent ou d'un intervalle entre deux dents successives.

Dans un tel cas, le dispositif électronique 17 teste en permanence le rapport cyclique des impulsions lorsque leur nombre par seconde correspond à une vitesse du véhicule qui est supérieure à la vitesse minimale précitée. S'il détecte une variation du rapport cyclique de l'ordre de par exemple plus de quelques pour-cent par rapport à sa valeur normale, qui est donc en général de 0,5, il en déduit que l'on est en présence d'une fraude et il envoie en conséquence son signal de détection de fraude, par exemple sur sa sortie 20 comme décrit précédemment. Par exemple, une fraude est détectée si le rapport cyclique des impulsions s'avère inférieur ou égal à 0,45 ou supérieur ou égal à 0,55, au lieu d'être de 0,5.

Bien entendu, dans le cas où la valeur figée du rapport cyclique serait différente de 0,5, par exemple parce que l'on utiliserait un pignon à dents non régulières, c'est cette autre valeur figée qu'il faudrait prendre en considération.

Il ne faut cependant pas que le dispositif 17 détecte faussement un fraude dans le cas où apparaitrait, comme c'est souvent le cas, une impulsion parasite accidentelle qui n'aurait rien à voir avec une fraude. Ceci est en réalité facilement différentiable, car ces impulsions parasites sont toujours tellement brèves qu'elles correspondraient finalement, si elles étaient régulièrement répétitives, à des vitesses totalement impossibles pour le véhicule, car trop élevées. Conformément à l'invention, le dispositif 17 ne prend pas en compte un rapport cyclique qui correspond à une impulsion électrique du capteur qui correspondrait elle-même à une vitesse supérieure à la vitesse maximale normalement possible pour le véhicule, par exemple à une vitesse supérieure à 180 km/h. A titre d'exemple numérique non limitatif, le dispositif 17 ne prend pas en compte des impulsions dont la durée est largement inférieure à 800 microsecondes.

A noter que dans cet exemple de réalisation très simplifié, le dispositif 17 peut se contenter simplement de comparer le rapport cyclique des impulsions avec une valeur figée de par exemple 0,5 : il ne comporte alors pas de moyens de test d'autres caractéristiques, tels que de test d'impédance.

Au lieu d'être connecté à un interrupteur statique 21 qui court-circuite la sortie de l'amplificateur 9, le fil de commande 20 peut aussi être connecté, en passant dans le câble blindé 22, directement au taximètre ou chronotachygraphe 2 pour fournir à ce dernier l'information selon laquelle il ne doit pas prendre en compte les impulsions de comptage du nombre de tours de roue qui lui parviennent. Cette information peut avantageusement être un train d'impulsions éventuellement codées, constituant éventuellement aussi des signaux de dialogue entre le microprocesseur ou organe logique équivalent contenu dans le dispositif de test 17, et le microprocesseur ou organe logique équivalent du taximètre ou chronotachygraphe 2.

De même que c'est le cas pour les tests de mesure effectués à l'installation du capteur 1 et du taximètre ou chronotachygraphe 2, au moins certains desdits tests systématiques ultérieurs de caractéristiques (par exemple le rapport cyclique des impulsions) sont effectués lorsque la fréquence des impulsions fournies par le capteur (c'est-à-dire en fait la vitesse du véhicule) est supérieure à une valeur minimale en dessous de laquelle le test ne pourrait pas valablement être effectué, ou pas être effectué du tout. Par ailleurs, un tel test est préférentiellement effectué pour plusieurs fréquences prédéterminées.

Un exemple général de réalisation du dispositif électronique de test 17 est représenté sur la figure 2.

Dans ce dispositif 17, les deux fils d'entrée 13,14 précités sont connectés, selon les fils 23 et 24, à un circuit 25 de test de l'impédance du dipôle actif présent entre les bornes 15 et 16, ou autrement dit entre les bornes de sortie de signal 26 et 27 (Figure 1) du capteur électronique 1.

Un tel circuit de test d'impédance 25 existe dans le commerce sous forme de circuit intégré qui est incorporé dans divers appareils de mesure tels que les multimètres numériques.

Le dispositif électronique 17 est équipé d'un microprocesseur 28, ou autre organe logique de calcul et de commande.

La mesure d'impédance qui est effectuée par le circuit intégré 25 est numérisée par ce circuit intégré et est transmise au microprocesseur 25 via une liaison 29. En revanche, cette mesure n'est préférentiellement déclenchée ou validée par le microprocesseur 28, via une liaison de commande 30, que lorsque le véhicule est à l'arrêt, c'est-à-dire en fait lorsque le microprocesseur 28 ne reçoit aucune série d'impulsions en provenance du capteur 1, et donc via les fils 13,14 et le circuit intermédiaire qui sera décrit maintenant.

Les signaux présents sur les deux fils 13 et 14 sont aussi appliqués sur une entrée 31 du microprocesseur 28 via successivement un amplificateur à gain réglable 32 dont le gain est ajusté par le microprocesseur 28 par l'intermédiaire d'une liaison de commande 33, et un comparateur 34 à une tension de référence Vr. de par exemple 0,2 volts, qui fournit sur l'entrée 31 du microprocesseur un niveau logique "0" ou "1" selon que la tension qui lui est appliquée sur son autre entrée 35, en sortie de l'amplificateur 32, est inférieure ou supérieure à cette tension de référence.

Les signaux finalement appliqués sur l'entrée 31 sont alors des signaux rectangulaires dont le rapport cylique dépend, si la tension de référence Vr et le gain de l'amplificateur 32 sont fixés, de la fréquence et de l'amplitude des signaux délivrés par le capteur 1 sur ses bornes 26 et 27. Ce rapport cyclique est donc caractéristique à la fois du capteur 1 et de la vitesse du véhicule.

La présence de l'amplificateur à gain réglable 32 ne s'impose pas absolument, mais cet amplificateur est utile non seulement pour obtenir sans difficulté des niveaux d'entrée acceptables pour différentes vitesses de déplacement du véhicule, mais encore pour pouvoir utiliser un même dispositif 17 pour toute une gamme de capteurs.

Le microprocesseur reçoit donc ces signaux rectangulaires sur son entrée 31 via une liaison 36, et il en calcule le rapport cyclique.

Si les valeurs de l'impédance testée par le circuit 25 et de ce rapport cyclique ne sont pas conformes aux valeurs qu'il a mémorisées lors de l'installation du taximètre ou chronotachygraphe, et si cette non-conformité ne présente pas un caractère accidentel dû à un parasite, le microprocesseur émet, comme expliqué précédemment, des signaux de défaut sur ses fils de sortie 18 et 20.

Une forme plus simple, et améliorée, de réalisation d'un dispositif de test 17 selon la figure 2 est représentée en Figure 3.

La simplification, et l'amélioration, portent ici sur le test de l'impédance, qui est remplacée par un test de la réponse du dipôle précité, c'est-à-dire en fait essentiellement du capteur 1, à une sollicitation en courant ou en tension qui est réalisée par l'envoi, par le microprocesseur 28 et via une liaison 37 comportant une résistance en série R, d'un signal électrique variable à travers le dipôle actif présent entre les fils 13 et 14, c'est-à-dire en fait à travers le capteur 1.

Ce signal électrique peut être un signal impulsionnel répétitif ou un signal alternatif, de fréquence prédéterminée F1 supérieure à une valeur minimale Fo en dessous de laquelle le test n'est pas pratiquement possible et qui est déterminée de manière expérimentale. Dans ce cas, le test est effectué lorsque le véhicule est à l'arrêt, afin que la comparaison selon l'invention ne soit pas perturbée par les signaux délivrés par le capteur 1 quand le véhicule roule.

Du point 38 de liaison potentiométrique entre la résistance R et ledit dipôle actif part aussi une connexion 39 vers un filtre passe-bas 40 qui fonctionne en intégrateur et qui fournit sur sa sortie 41, en réponse au signal qu'il reçoit du microprocesseur 28 et par le montage potentiométrique constitué par la résistance R et ledit dipôle actif, une tension ou une rampe de tension dont l'amplitude est codée en signaux numérisés, au moyen d'un convertisseur analogique-numérique 42.

Ces signaux numérisés, qui sont donc représentatifs de la réponse dudit dipôle au signal de fréquence F1 et donc finalement bien des caractéristiques électriques internes de ce dipôle, sont transmis pour analyse au microprocesseur 28 via une liaison 43.

Par sécurité, cette analyse peut être réalisée pour plusieurs fréquences F1, F2, F3,..., de signaux fournis par le microprocesseur 28 sur la liaison 37, au lieu de l'être pour la seule fréquence F1.

Selon une autre forme d'utilisation du circuit de la figure 3, le signal de sollicitation ou déclenchement de test qui est délivré par le microprocesseur 28 sur la liaison 37 est une impulsion fine, d'une durée de quelques dizaines de microsecondes par exemple, qui est envoyée sur cette liaison lorsque le véhicule roule à une vitesse inférieure à une vitesse prédéterminée (au-dessus de laquelle le test ne serait pas possible faute de temps suffisant entre deux impulsions successives présentes sur le fil 36), et immédiatement après le front de descente de chaque impulsion présente sur le fil 36, à l'entrée 31 du microprocesseur 28. Par exemple, cette vitesse maximale correspond à une fréquence des signaux du capteur qui est de l'ordre de 200 Hertz.

Le signal intégré qui est alors recueilli sur le fil 41, en sortie du filtre passe-bas 40, est alors une rampe de tension qui caractérise la réponse du dipôle précité à l'envoi de cette impulsion fine. C'est cette rampe de tension qui est numérisée par le convertisseur 42 pour être analysée et comparée par le microprocesseur 28. Bien entendu, cette comparaison doit être terminée avant le front de montée de la prochaine impulsion en provenance du capteur 1 et présente sur l'entrée 31.

Pour fixer les idées, cette impulsion fine est envoyée par le microprocesseur 28 entre environ une dizaine de microsecondes à quelques millisecondes après ledit front de descente de l'impulsion en provenance du capteur 1.

De la sorte, la comparaison des caractéristiques internes du dipôle avec celles préalablement mémorisées peut être effectuée lorsque le véhicule roule normalement. Bien entendu, dans le cas précédent où la comparaison de ces caractéristiques internes est effectuée lorsque le véhicule est à l'arrêt, il est aussi possible d'appliquer, au lieu d'un signal de fréquence F1,F2,F3,..., une impulsion de déclenchement de test et de relever de même façon la réponse impulsionnelle, c'est-à-dire la rampe de tension, qui en résulte sur la sortie 41 du filtre passe-bas 40. Cette façon de faire est cependant moins avantageuse que celle que l'on vient de décrire, puisqu'elle nécessite que le véhicule soit à l'arrêt.

Le circuit selon la figure 3 peut être simplifié comme représenté en Figure 4, afin de s'affranchir de la présence du convertisseur analogique/numérique 42, qui est un composant relativement onéreux.

Dans ce cas, le signal - rampe de tension ou tension intégrée - qui apparaît sur le fil 41 en sortie du filtre passe-bas 40 est appliqué sur une première entrée d'un comparateur analogique 44 qui reçoit sur son autre entrée une tension de référence Vo.

Il en résulte, sur son fil de sortie 43, un niveau logique "0" ou "1" qui est appliqué au microprocesseur 28 selon que la tension sur le fil 21 est inférieure ou supérieure à la tension Vo. Le microprocesseur 28 analyse le décalage temporel entre le moment où il émet son signal de test sur la liaison 37 et le moment où il reçoit un niveau logique "1" sur son entrée 43. Il en déduit la réponse particulière du dipôle précité à ce signal de test, et caractérise par cette réponse lesdites caractéristiques électriques internes de ce dipôle.

Une intéressante variante de réalisation du dispositif selon les figures 1 et 2 est schématisée en Figure 5.

Selon ce cas de figure, les signaux du capteur 1 sont, d'exactement même façon, à la fois appliqués aux circuits d'A.B.S. et au compteur de vitesse via les fils 11 et 12, au circuit 25 de test des caractéristiques électriques internes du dipôle actif présent entre les fils de signal 4 et 5 de sortie du capteur 1, ce circuit 25 étant toujours relié au microprocesseur 28 par les mêmes liaisons 29 et 30, et au microprocesseur 28 via les mêmes amplificateurs à gain réglable 32 et comparateur 34.

Pour une claire comparaison du circuit de la figure 5 avec celui selon les figures 1 et 2, tous les éléments communs sont, comme il se doit, désignés par les mêmes références.

Le circuit de la figure 5 ne comporte ni amplificateur de séparation 9, ni relais statique 21, ni liaison d'alarme 18 vers le tableau de bord. Les signaux de sortie du capteur 1 sont, comme précédemment, appliqués au microprocesseur 28 via l'amplificateur à gain ajustable 32 et le comparateur 34, mais c'est le microprocesseur lui-même qui transforme ces signaux en impulsions d'information qui sont directement transmises, via le fil de sortie 10 passant dans le câble blindé 22, au microprocesseur qui équipe le taximètre ou chronotachygraphe 2.

Il va de soi qu'en cas de non conformité, et donc de détection d'une fraude, les signaux ainsi transmis au taximètre ou chronotachygraphe 2 ne sont plus seulement, ou ne sont plus du tout, des signaux représentatifs du signal de vitesse délivré par le capteur 1, mais sont des signaux d'information de détection d'une fraude. Comme précédemment, ces derniers signaux viennent empêcher le bon fonctionnement du taximètre ou chronotachygraphe 2, du fait que ce dernier ne prend plus en compte les informations censées représenter le nombre de tours de roue, et ils peuvent aussi déclencher une alarme visuelle et/ou sonore.

Les signaux d'information de détection d'une fraude sont d'une manière très générale des signaux particuliers. Ils peuvent par exemple être tout simplement des signaux de vitesse tout à fait invraisemblables pour le véhicule concerné, ou autre.

Comme il va de soi, l'invention n'est nullement limitée aux exemples de réalisation qui viennent d'être décrits.

C'est ainsi par exemple que tout le circuit qui se trouve dans la boite blindée 8 pourrait tout simplement être compris dans le taximètre ou le chronotachygraphe 2, ce qui permettrait non seulement de s'affranchir de la boite blindée 8 et du câble blindé 22, mais encore de confondre en un seul microprocesseur le microprocesseur 28 et le microprocesseur du taximètre ou chronotachygraphe.

Le choix du rapport cyclique des impulsions comme caractéristique du signal est préférentiel par sa simplicité, mais le choix n'est pas limitatif. On pourrait par exemple choisir comme caractéristique la courbe de variation de la tension de crète du signal électrique fourni par ce capteur en fonction de la vitesse du véhicule, ou bien sa réponse à une accélération ou une décélération du véhicule, c'est-à-dire la dérivée de la fréquence du signal émis par ce capteur par rapport au temps : si cette accélération ou décélération est anormalement rapide, par exemple si on passe de 0 à 100 km/h en deux secondes, il y a nécessairement une fraude au niveau des fils de sortie du capteur.

Au lieu de vérifier une seule caractéristique du signal, on pourrait aussi en vérifier plusieurs.

Le capteur 1 pourrait, bien entendu, être un capteur électronique d'un tout autre type, ou être constitué d'un capteur mécanique classiquement assorti d'un dispositif de transformation des impulsions mécaniques en impulsions électriques : c'est cet ensemble qui est alors appellé "capteur électronique" au sens de la présente invention.

## Revendications

1. Procédé pour éviter les fraudes sur un taxi équipé d'un taximètre (2) ou sur un camion équipé d'un chronotachygraphe (2), le véhicule - taxi ou camion - étant équipé d'au moins un capteur électronique (1) qui au moins est utilisé pour le taximètre ou le chronotachygraphe,
caractérisé en ce qu'il consiste :
. à brancher un dipôle actif (8) directement en parallèle sur deux ou sur les deux fils (4,5) de sortie de signal électrique de ce capteur (1),
. et à déclencher une action électronique anti-fraude (18-19 , 20-21) qui au moins consiste à modifier l'information électronique normalement transmise au taximètre ou chronotachygraphe si au moins une des caractéristiques internes dudit dipôle actif (8) alors présent entre ces deux fils (4,5), et/ou au moins une des caractéristiques du signal électrique disponible entre ces deux fils (4,5) lors du déplacement normal du véhicule, a été modifiée par rapport à des valeurs de référence.

2. Procédé selon la revendication 1, caractérisé en ce que ces valeurs de référence sont des valeurs de référence préalablement mémorisées.

3. Procédé selon la revendication 1 ou la revendication 2, caractérisé en ce que la caractéristique interne dudit dipôle actif est son impédance.

4. Procédé selon l'une des revendications 1 à 3, caractérisé en ce qu'au moins un test des caractéristiques internes est effectué lorsque le véhicule est à l'arrêt.

5. Procédé selon la revendication 1, caractérisé en ce que, pour tester cette caractéristique interne, on injecte au moins une tension ou courant variables à travers ce dipôle, et en ce que l'on relève alors la réponse impulsionnelle ou fréquentielle correspondante dudit dipôle.

6. Procédé selon la revendication 5, caractérisé en ce que l'on injecte ainsi au moins une impulsion de courant ou de tension à travers ledit dipôle, ce dernier étant connecté à un intégrateur (40) pour obtenir ladite réponse impulsionnelle.

7. Procédé selon la revendication 6, caractérisé en ce que l'on injecte cette impulsion de courant ou de tension juste après le front de descente d'un signal rectangulaire issu du signal délivré par le capteur (1) lorsque le véhicule roule, et en ce que ce test est réalisé lorsque le véhicule roule à une vitesse inférieure à une vitesse prédéterminée.

8. Procédé selon la revendication 1, caractérisé en ce que ladite caractéristique du signal présent aux bornes de ce dipôle est le rapport cyclique des impulsions qui correspondent au signal rectangulaire issu du signal délivré par le capteur (1).

9. Procédé selon la revendication 8, caractérisé en ce que, ledit capteur électronique (1) délivrant normalement toujours des impulsions dont le rapport cyclique est constant, ladite action électronique anti-fraude est déclenchée si le test de la valeur du rapport cyclique révèle que ce dernier s'écarte d'au moins une valeur prédéterminée par rapport à ladite valeur constante normale.

10. Procédé selon la revendication 9, caractérisé en ce que ladite action anti-fraude n'est déclenchée que si le nombre d'impulsions par seconde fournies par le capteur (1) correspond à une vitesse du véhicule qui est supérieure à une vitesse minimale très lente, par exemple de l'ordre de quelques kilomètres par heure.

11. Procédé selon l'une des revendications 9 ou 10, caractérisé en ce que l'on ne prend pas en compte, afin de s'affranchir des accidentelles impulsions parasites qui ne seraient pas dues à une fraude, un rapport cyclique qui correspond à une impulsion électrique du capteur d'une finesse anormale.

12. Procédé selon la revendication 1, caractérisé en ce que ladite caractéristique du signal est la courbe de variation, en fonction de la vitesse du véhicule, de la tension de crète du signal électrique fourni par ledit capteur (1).

13. Procédé selon la revendication 1, caractérisé en ce que ladite caractéristique du signal est la dérivée par rapport au temps de la fréquence du signal émis par ce capteur (1).

14. Procédé selon la revendication 2, caractérisé en ce que, à l'installation du taximètre ou chronotachygraphe (2) sur le véhicule, on effectue et mémorise des mesures de ces caractéristiques en faisant rouler le véhicule à une ou plusieurs vitesses prédéterminées, et en ce que l'on compare ensuite, lors des tests de caractéristiques qui sont faits ensuite pour détecter une fraude éventuelle, ces dernières caractéristiques à celles ainsi mémorisées à l'origine, afin de déterminer si elles sont bien conformes à ces caractéristiques mémorisées à l'origine.

15. Procédé selon la revendication 1, caractérisé en ce que ces caractéristiques ainsi testées pour détecter une fraude éventuelle ne sont déclarées non-conformes que si elles présentent un caractère récurrent ou si elles sont d'amplitude franchement anormale.

16. Procédé selon la revendication 1, caractérisé en ce qu'au moins un test des caractéristiques du signal présent aux bornes de ce dipôle est effectué lorsque le véhicule roule à une vitesse supérieure à une vitesse prédéterminée.

17. Dispositif pour la mise en oeuvre du procédé selon l'une quelconque des revendications 1 à 16, caractérisé en ce qu'il comprend, dans une enveloppe mécaniquement inviolable (6,8,22), un dispositif électronique (17) de comparaison de ladite ou desdites caractéristiques à une ou plusieurs valeurs de référence mémorisées, ce dispositif (17) étant couplé à des moyens (20,21) anti-fraude associés au taximètre ou chronotachygraphe (2).

18. Dispositif selon la revendication 17, caractérisé en ce que, le capteur électronique (1) étant placé au niveau d'une roue du véhicule, tout le circuit compris entre le point (7) d'articulation de la roue qui comporte ce capteur (1) et ledit taximètre ou chronotachygraphe (2), est rendu inviolable par des moyens (6,8,22) de protection mécanique.

19. Dispositif selon la revendication 17 ou la revendication 18, caractérisé en ce que ledit dispositif électronique (17) comporte un organe logique de commande et de calcul (28) qui au moins réalise ladite comparaison à des valeurs de référence, et qui réalise la commande des moyens anti-fraude associés au taximètre ou chronotachygraphe (2).

20. Dispositif selon la revendication 19, caractérisé en ce que cet organe logique (28) effectue en outre au moins le calcul de ladite ou desdites caractéristiques du signal présent aux bornes dudit dipôle actif.

21. Dispositif selon la revendication 19 ou la revendication 20, caractérisé en ce qu'il est prévu, pour cet organe logique (28), une sortie (37) qui est reliée à l'une des bornes (13) dudit dipôle actif à travers une résistance (R), et en ce que le point (38) de jonction potentiométrique entre cette résistance (R) et ce dipôle est relié à une entrée (43) de cet organe logique (28) par l'intermédiaire d'un intégrateur (40) et d'un organe (42,44) de transformation, en données numérisées, du signal analogique relevé sur la sortie (41) de cet intégrateur (40).

## Patentansprüche

1. Verfahren zum Verhindern von betrügerischen Manipulationen bei einem mit einem Taxameter (2) ausgestatteten Taxi oder bei einem mit einem Fahrtenschreiber ausgestatteten Lastkraftwagen, wobei das Fahrzeug - Taxi oder Lastkraftwagen - mit mindestens einem elektronischen Meßfühler (1) ausgestattet ist, der zumindest für das Taxameter oder den Fahrtenschreiber benutzt wird, gekennzeichnet durch folgende Schritte:
- ein aktiver Dipol (8) wird parallel direkt an zwei oder an die zwei ein elektrisches Ausgangssignal des Meßfühlers (1) liefernden Leiter (4, 5) angeschlossen,
- und es wird ein elektronischer Vorgang gegen betrügerische Manipulationen (18-19, 20-21) ausgelöst, der zumindest darin besteht, daß die elektronische Information, die normalerweise an das Taxameter oder den Fahrtenschreiber übertragen wird, verändert wird, wenn zumindest eine der internen Kenngrößen des folglich zwischen den zwei Leitern (4, 5) liegenden aktiven Dipols (8) und/oder mindestens eine der Kenngrößen des zwischen den zwei Leitern (4, 5) während der normalen Bewegung des Fahrzeugs verfügbaren elektrischen Signals gegenüber Referenzwerten verändert wurden.

2. Verfahren nach Anspruch 1, dadurch gekennzeichnet, daß die Referenzwerte zuvor gespeicherte Referenzwerte sind.

3. Verfahren nach Anspruch 1 oder 2, dadurch gekennzeichnet, daß die interne Kenngröße des aktiven Dipols dessen Impedanz ist.

4. Verfahren nach einem der Ansprüche 1 bis 3, dadurch gekennzeichnet, daß zumindest eine Überprüfung der internen Kenngröße erfolgt, wenn das Fahrzeug stillsteht.

5. Verfahren nach Anspruch 1, dadurch gekennzeichnet, daß zur Überprüfung der internen Kenngröße mindestens eine veränderbare Spannung oder ein veränderbarer Strom an den Dipol angelegt wird, und daß dann die entsprechende Impuls- oder Frequenzantwort des Dipols ausgelesen wird.

6. Verfahren nach Anspruch 5, dadurch gekennzeichnet, daß mindestens ein Strom- oder Spannungsimpuls an den Dipol angelegt wird, der mit einem Integrator (40) verbunden ist, um die Impulsantwort zu erhalten.

7. Verfahren nach Anspruch 6, dadurch gekennzeichnet, daß der Strom- oder Spannungsimpuls genau nach der abfallenden Flanke eines Rechtecksignals eingeleitet wird, das von dem mittels des Meßfühlers (1) während des Fahrens des Fahrzeugs gelieferten Signals abgeleitet ist, und daß die Überprüfung durchgeführt wird, wenn das Fahrzeug mit einer Geschwindigkeit fährt, die kleiner als eine vorbestimmte Geschwindigkeit ist.

8. Verfahren nach Anspruch 1, dadurch gekennzeichnet, daß die Kenngröße des an den Anschlüssen des Dipols anliegenden Signals das Zyklusverhältnis der Impulse ist, die dem Rechtecks signal entsprechen, das von dem mittels des Meßfühlers (1) gelieferten Signal stammt.

9. Verfahren nach Anspruch 8, dadurch gekennzeichnet, daß, da der elektronische Meßfühler (1) normalerweise ständig Impulse liefert, deren Zyklusverhältnis konstant ist, der elektronische Vorgang gegen betrügerische Manipulationen ausgelöst wird, wenn die Überprüfung des Werts des Zyklusverhältnisses ergibt, daß das letztere um mindestens einem vorbestimmten Wert von dem konstanten Normalwert abweicht.

10. Verfahren nach Anspruch 9, dadurch gekennzeichnet, daß der Vorgang gegen betrügerische Manipulationen nur ausgelöst wird, wenn die pro Sekunde von dem Meßfühler (1) gelieferte Impulszahl einer Geschwindigkeit des Fahrzeugs entspricht, die größer als eine sehr langsame Minimalgeschwindigkeit, zum Beispiel etwa einige Kilometer pro Stunde, ist.

11. Verfahren nach Anspruch 9 oder 10, dadurch gekennzeichnet, daß, um zufällige Störimpulse, die nicht Folge einer betrügerischen Manipulation sind, zu unterdrücken, ein Zyklusverhältnis nicht berücksichtigt wird, das einem ungewöhnlich schmalen elektrischen Impuls des Meßfühlers entspricht.

12. Verfahren nach Anspruch 1, dadurch gekennzeichnet, daß die Kenngröße des Signals die Änderung der Spitzenspannung des von dem Meßfühler (1) gelieferten elektrischen Signals in Abhängigkeit von der Geschwindigkeit des Fahrzeugs ist.

13. Verfahren nach Anspruch 1, dadurch gekennzeichnet, daß die Kenngröße des Signals die Ableitung der Frequenz des von dem Meßfühler (1) abgegebenen Signals nach der Zeit ist.

14. Verfahren nach Anspruch 2, dadurch gekennzeichnet, daß beim Einbau des Taxameters oder Fahrtenschreibers (2) an dem Fahrzeug Messungen der Kenngrößen so durchgeführt und gespeichert werden, daß das Fahrzeug mit einer oder mehreren vorbestimmten Geschwindigkeiten fährt, und daß dann während der Kenngrößenüberprüfungen, die später zur Fest zustellung einer etwaigen betrügerischen Manipulation durchgeführt werden, die letzteren Kenngrößen mit den so anfänglich gespeicherten verglichen werden, um festzustellen, ob sie noch in Übereinstimmung mit den anfänglich gespeicherten Kenngrößen sind.

15. Verfahren nach Anspruch 1, dadurch gekennzeichnet, daß die zur Feststellung einer etwaigen betrügerischen Manipulation überprüften Kenngrößen nur als fehlerhaft angesehen werden, wenn sie wiederkehrend sind oder wenn sie eine deutlich ungewöhnliche Amplitude haben.

16. Verfahren nach Anspruch 1, dadurch gekennzeichnet, daß zumindest eine Überprüfung der Kenngrößen des an den Anschlüssen des Dipols anliegenden Signals vorgenommen wird, wenn das Fahrzeug mit einer Geschwindigkeit fährt, die größer als eine vorbestimmte Geschwindigkeit ist.

17. Vorrichtung zur Durchführung des Verfahrens nach einem der Ansprüche 1 bis 16, dadurch gekennzeichnet, daß sie in einem mechanisch unzerstörbaren Gehäuse (6, 8, 22) eine elektronische Schaltung (17) zum Vergleich der Kenngröße(n) mit einem oder mehreren gespeicherten Referenzwerten umfaßt, wobei die Schaltung (17) mit Mitteln gegen betrügerische Manipulationen (20, 21) gekoppelt ist, die mit dem Taxameter oder dem Fahrtenschreiber (2) in Verbindung stehen.

18. Vorrichtung nach Anspruch 17, dadurch gekennzeichnet, daß bei im Bereich eines Rads des Fahrzeugs angeordnetem, elektronischem Meßfühler (1) der gesamte Signalweg zwischen dem Drehpunkt (7) des Rades, das den Meßfühler (1) umfaßt, und dem Taxameter oder Fahrtenschreiber (2) mit mechanischen Schutzmitteln (6, 8, 22) unangreifbar ausgebildet ist.

19. Vorrichtung nach Anspruch 17 oder 18, dadurch gekennzeichnet, daß die elektronische Schaltung (17) ein logisches Steuer- und Rechenmittel (28) umfaßt, das zumindest den Vergleich mit den Referenzwerten durchführt und mit dem Taxameter oder Fahrtenschreiber (2) verbundenen Mittel gegen betrügerische Manipulationen steuert.

20. Vorrichtung nach Anspruch 19, dadurch gekennzeichnet, daß das logische Mittel (28) außerdem mindestens die Berechnung der Kenngröße(n) des an den Anschlüssen des aktiven Dipols auftretenden Signals durchführt.

21. Vorrichtung nach Anspruch 19 oder 20, dadurch gekennzeichnet, daß das logische Mittel (28) einen Ausgang (37) hat, der mit einem der Anschlüsse (13) des aktiven Dipols über einen Widerstand (R) verbunden ist, und daß der Abgriff (38) zwischen dem Widerstand (R) und dem Dipol mit einem Eingang (43) des logischen Mittels (28) über einen Integrator (40) und ein Transformationsmittel (42, 44) für das am Ausgang (41) des Integrators (40) ausgegebene, analoge Signal in digitale Daten verbunden ist.

## Claims

1. Method for avoiding fraud in a taxi with a taximeter (2) or in a lorry with a chrono-tachograph (2), the vehicle - taxi or lorry - being equipped with at least one electronic sensor (1) which at least is used for the taximeter or chrono-tachograph,
characterized in that it consists:
. in branching an active dipole (8) directly in parallel on two or on the two electric signal outlet wires (4, 5) of this sensor (1),
. and in triggering off an electronic anti-fraud action (18-19, 20-21) which at least consists in modifying the electronic information normally transmitted to the taximeter or chrono-tachograph if at least one of the internal characteristics of said active dipole (8) then present between these two wires (4, 5), and/or at least one of the characteristics of the electric signal available between these two wires (4, 5) upon normal displacement of the vehicle, has been modified with respect to reference values.

2. Method according to Claim 1, characterized in that these reference values are previously memorized reference values.

3. Method according to Claim 1 or Claim 2, characterized in that the internal characteristic of said active dipole is its impedance.

4. Method according to one of Claims 1 to 3, characterized in that at least one test of the internal characteristics is effected when the vehicle is stationary.

5. Method according to Claim 1, characterized in that, in order to test this internal characteristic, at least one variable voltage or current is injected through this dipole, and in that the corresponding pulse or frequency response of said dipole is then picked up.

6. Method according to Claim 5, characterized in that at least one current or voltage pulse is injected through said dipole, the latter being connected to an integrator (40) to obtain said pulse response.

7. Method according to Claim 6, characterized in that this current or voltage pulse is injected just after the trailing edge of a rectangular signal issuing from the signal delivered by the sensor (1) when the vehicle is moving, and in that this test is effected when the vehicle is moving at a speed lower than a predetermined speed.

8. Method according to Claim 1, characterized in that said characteristic of the signal present at the terminals of this dipole is the cyclic ratio of the pulses which correspond to the rectangular signal issuing from the signal delivered by the sensor (1).

9. Method according to Claim 8, characterized in that, said electronic sensor (1) normally always delivering pulses whose cyclic ratio is constant, said electronic anti-fraud action is triggered off if the test of the value of the cyclic ratio reveals that the latter deviates from at least one predetermined value with respect to said normal constant value.

10. Method according to Claim 9, characterized in that said anti-fraud action is triggered off only if the number of pulses per second furnished by the sensor (1) corresponds to a speed of the vehicle which is greater than a very low minimum speed, for example of the order of some kilometers per hour.

11. Method according to one of Claims 9 or 10, characterized in that, in order to be free of the accidental parasitic pulses which are not due to a fraud, a cyclic ratio which corresponds to an abnormally fine electric pulse of the sensor, is not taken into account.

12. Method according to Claim 1, characterized in that said characteristic of the signal is the variation curve, as a function of the speed of the vehicle, of the peak voltage of the electric signal furnished by said sensor (1).

13. Method according to Claim 1, characterized in that said characteristic of the signal is the derivative with respect to time of the frequency of the signal emitted by this sensor (1).

14. Method according to Claim 2, characterized in that, upon installation of the taximeter or chrono-tachograph (2) on the vehicle, measurements of these characteristics are made and memorized by causing the vehicle to move at one or more predetermined speeds, and in that, during tests of characteristics which are then made to detect a possible fraud, these latter characteristics are then compared with those thus originally memorized, in order to determine whether they are in conformity with these characteristics memorized originally.

15. Method according to Claim 1, characterized in that these characteristics thus tested to detect a possible fraud are declared non-conform only if they present a recurrent character or if they are of frankly abnormal amplitude.

16. Method according to Claim 1, characterized in that at least one test of the characteristics of the signal present at the terminals of this dipole is effected when the vehicle is moving at a speed greater than a predetermined speed.

17. Device for carrying out the method according to any one of Claims 1 to 16, characterized in that it comprises, in a mechanically tamperproof envelope (6, 8, 22), an electronic device (17) for comparing said characteristic or characteristics with one or more memorized preference values, this device (17) being coupled to anti-fraud means (20, 21) associated with the taximeter or chrono-tachograph (2).

18. Device according to Claim 17, characterized in that, the electronic sensor (1) being placed at the level of a wheel of the vehicle, all the circuit included between the point (7) of articulation of the wheel which comprises this sensor (1) and said taximeter or chrono-tachograph (2), is rendered tamperproof by mechanical protection means (6, 8, 22).

19. Device according to Claim 17 or Claim 18, characterized in that said electronic device (17) comprises a logic control and computing member (28) which at least effects said comparison with reference values, and which effects control of the anti-fraud means associated with the taximeter or chrono-tachograph (2).

20. Device according to Claim 19, characterized in that this logic member (28) effects in addition at least the computing of said characteristic or characteristics of the signal present at the terminals of said active dipole.

21. Device according to Claim 19 or Claim 20, characterized in that there is provided, for this logic member (28), an output (37) which is connected to one of the terminals (13) of said active dipole through a resistor (R), and in that the point (38) of potentiometric junction between this resistor (R) and this dipole is connected to an input (43) of this logic member (28) via an integrator (40) and a member (42, 44) for transformation, into digitalized data, of the analog signal picked up on the output (41) of this integrator (40).
